# FASCICULE DE BREVET EUROPEEN

(11) **EP 3 610 542 B1**
(45) Date de publication et mention de la délivrance du brevet: **07.12.2022**
(21) Numéro de dépôt: 18715725.0
(22) Date de dépôt: 09.04.2018
(51) Int. Cl.: H02G 9/02, H02G 15/14

(54) **SYSTÈME DE RACCORDEMENT DE CÂBLES SOUS-MARINS**
SYSTEM ZUR VERBINDUNG VON UNTERWASSERKABELN
SYSTEM FOR CONNECTING SUBMARINE CABLES

(30) Priorité: 10.04.2017 FR 1753087
(43) Date de publication de la demande: 19.02.2020
(73) Titulaire: NAVAL Group, 75015 Paris (FR)
(72) Inventeur: PRISER, Mathieu, 75015 Paris (FR); PEROU, Jean-Yves, 75015 Paris (FR); GAMBARETTI, Patrick, 75015 Paris (FR)
(74) Mandataire: Lavoix
(86) Numéro de dépôt international: PCT/EP2018/059025
(87) Numéro de publication internationale: WO 2018/189111

(56) Documents cités:
- EP-A1- 2 237 380
- EP-A1- 2 793 333
- WO-A1-2016/022272
- GB-A- 2 167 877
- GB-A- 2 481 852
- US-A- 3 602 873
- Seacon Advanced Products Llc: "Subsea umbilical termination assembly", , 31 décembre 2014 (2014-12-31), XP055430962, Extrait de l'Internet: URL:http://seaconworldwide.com/wp-content/ uploads/SUTA.pdf [extrait le 2017-12-01]

## Description

La présente invention concerne un système de raccordement de câbles par exemple hybrides sous-marins.

Dans la présente description, le terme câble « hybride » doit être compris comme désignant par exemple des câbles véhiculant de la puissance et/ou de l'information, etc..., c'est-à-dire électriques, optiques....

Plus particulièrement, un tel système peut être utilisé pour raccorder des câbles hybrides sous-marins tels que des câbles ombilicaux pour des fermes d'énergie marine renouvelable.

Il existe déjà, dans l'état de la technique, de tels systèmes de raccordement de câbles hybrides sous-marins, qui comportent des systèmes de réception des extrémités de ces câbles et qui sont destinées à être fixées l'une à/sur l'autre, pour permettre le raccordement des câbles.

Un exemple de réalisation d'un tel système est décrit dans le document GB 2 481 852.

Le système de raccordement décrit dans ce document est un système de raccordement dit « en ligne », c'est-à-dire que les câbles sont dans le prolongement l'un de l'autre, au niveau de leur raccordement.

On conçoit cependant qu'un tel système présente un certain nombre d'inconvénients.

En effet, un tel système de raccordement en ligne des câbles est extrêmement encombrant, ce qui se traduit par des problèmes de manutention, de montage et de traînée hydrodynamique induite par les puissants courants des milieux hydroliens par exemple.

Par ailleurs, un tel système se traduit également par des efforts de flexion importants dans les câbles, les structures et les accessoires correspondants pendant la manutention de ceux-ci.

Des moyens de reprise d'efforts de type par exemple en demi-lune, dits « quadrant », permettant par exemple de résoudre un certain nombre de ces problèmes, ont d'ailleurs été proposés de façon complémentaire.

WO 2016/022272 A1 décrit un système de collecte et de communication de données sous-marines installé à un point d'interconnexion sous-marin ou à un connecteur sous-marin entre des câbles sous-marins électriques, optiques ou électro-optiques hybrides.

Mais tous ces systèmes ne donnent pas pleinement satisfaction et nécessitent beaucoup d'espace sur le pont du navire d'installation.

Le but de l'invention est donc de résoudre ces problèmes.

A cet effet, l'invention a pour objet un système de raccordement de câbles sous-marins et notamment de câbles ombilicaux pour des fermes d'énergie marine renouvelable, selon la revendication 1.

Selon des modes de réalisation particuliers, le système selon l'invention peut comprendre l'une ou plusieurs des caractéristiques des revendications 2 à 8.

L'invention sera mieux comprise à la lecture de la description qui va suivre, donnée uniquement à titre d'exemple et faite en se référant aux dessins annexés, sur lesquels :

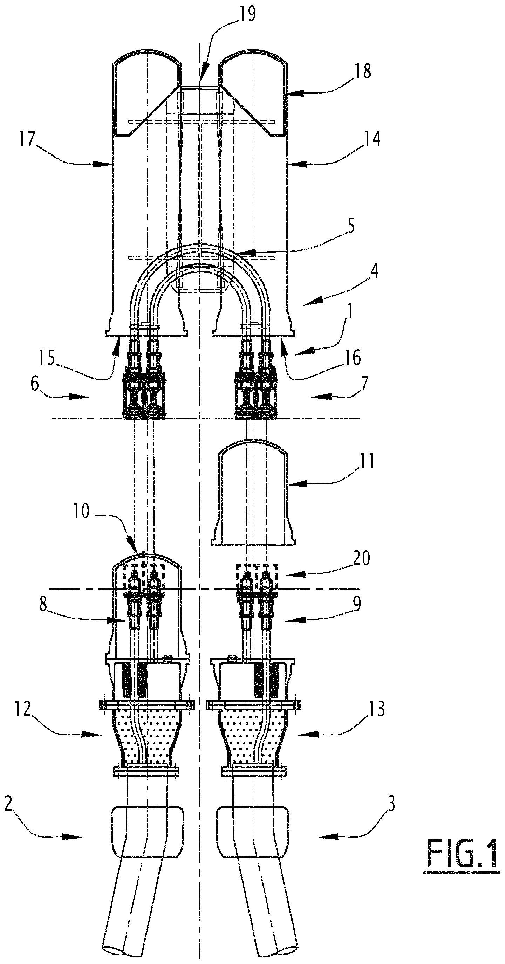

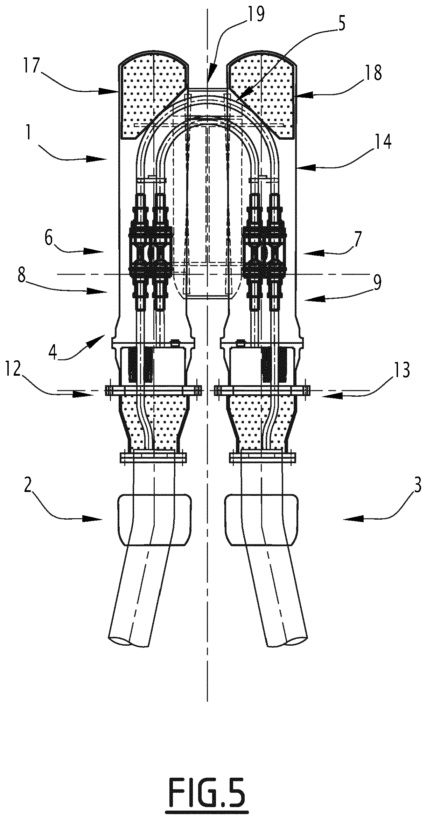

- les figures 1 à 5 illustrent une séquence de vues montrant la structure de face d'un exemple de réalisation d'un système de raccordement selon l'invention et le raccordement de câbles grâce à un tel système de raccordement.

On a en effet illustré sur ces figures, un système de raccordement de câbles sous-marins et notamment de câbles ombilicaux pour des fermes d'énergie marine renouvelable.

Le système de raccordement est désigné par la référence générale 1 sur ces différentes figures et permet de raccorder des câbles sous-marins tels que par exemple des câbles ombilicaux 2 et 3.

En fait, et contrairement aux systèmes de l'état de la technique, dans lesquels les câbles sont raccordés et fixés directement l'un sur l'autre par exemple en ligne, dans le système de raccordement selon l'invention, on utilise une pièce intermédiaire de raccordement de ces câbles.

Cette pièce intermédiaire de raccordement est désignée par la référence générale 4 sur ces figures.

En fait, cette pièce intermédiaire 4 de raccordement de ces câbles 2 et 3, est donc adaptée pour être placée entre des extrémités à raccorder des câbles 2 et 3 et comporte des moyens de raccordement électrique de ces câbles et des moyens de liaison mécanique de ceux-ci.

Les extrémités des câbles ne sont donc pas fixées directement l'une sur l'autre comme dans l'état de la technique.

Comme cela sera décrit plus en détail par la suite, les moyens de raccordement de ces câbles comportent par exemple non seulement des moyens de raccordement électriques, mais ils peuvent également comporter des moyens de raccordement optique par exemple de fibres optiques des câbles ombilicaux, si ces câbles sont des câbles dits « hybrides », c'est-à-dire comportant à la fois des câbles électriques et des fibres optiques.

En fait, les moyens de raccordement électrique des câbles se présentent sous la forme d'une portion de câble, de forme générale en U, qui est désignée par la référence générale 5 sur ces figures.

Les extrémités de cette portion de câble en U 5, et des câbles ombilicaux 2 et 3 comportent alors des connecteurs complémentaires désignés par les références générales 6 et 7, et 8 et 9.

Ces connecteurs peuvent alors être des connecteurs électriques, optiques... selon la nature des câbles à raccorder.

Des capots étanches par exemple 10 et 11, peuvent être utilisés pour protéger ces connecteurs et en particulier les connecteurs 8 et 9 des extrémités des câbles ombilicaux 2 et 3, avant leur raccordement pour protéger ceux-ci par exemple lors de leurs différentes manipulations.

Ces capots étanches peuvent alors être fixés de façon amovible, par exemple sur des capuchons d'extrémité des câbles 12 et 13 fixés autour des câbles à proximité des extrémités de ceux-ci destinées à être raccordées.

Ces capuchons d'extrémité sont fixés de façon étanche sur les câbles.

Le système de raccordement selon l'invention et la pièce intermédiaire 4 comportent également un boîtier étanche désigné par la référence générale 14 sur ces figures.

Sur ces figures ce boîtier 14 présente la forme générale d'un U renversé dont les extrémités de jambes comportent deux orifices de passage des câbles à raccorder.

Ces deux orifices de ce boîtier sont désignés par les références 15 et 16 sur ces figures.

Ces orifices 15 et 16, ou du moins les jambes du boîtier autour de ces orifices, sont munis de moyens de fixation sur les capuchons 12 et 13 d'extrémité des câbles, comme cela sera décrit plus en détail par la suite.

Dans l'exemple de réalisation décrit en regard de ces figures, le boîtier étanche 14 est libre en déplacement par rapport aux moyens de raccordement des câbles, c'est-à-dire à la portion de câble 5 dans l'exemple, pour permettre à ces éléments c'est-à-dire au boîtier et à la portion de câble, de se déplacer l'un par rapport à l'autre comme cela sera décrit plus en détail par la suite.

En fait, le boîtier se présente sous la forme illustrée avec deux jambes latérales désignées par les références 17 et 18 sur ces figures, fermées à leurs extrémités opposées à celles munies des orifices 15 et 16, et ces jambes sont reliées par une portion formant pont 19 entre celles-ci.

On conçoit alors que dans l'exemple de réalisation illustré, la portion de câble en U 5 des moyens de raccordement, s'étend à travers les orifices de ces jambes et la portion en forme de pont du boîtier 14.

L'état initial du système de raccordement avant montage et raccordement des câbles l'un à l'autre, est alors par exemple celui illustré sur la figure 1.

Il convient d'abord de retirer les capots 10 et 11 de protection des extrémités des câbles 2 et 3, comme cela est illustré sur la figure 1.

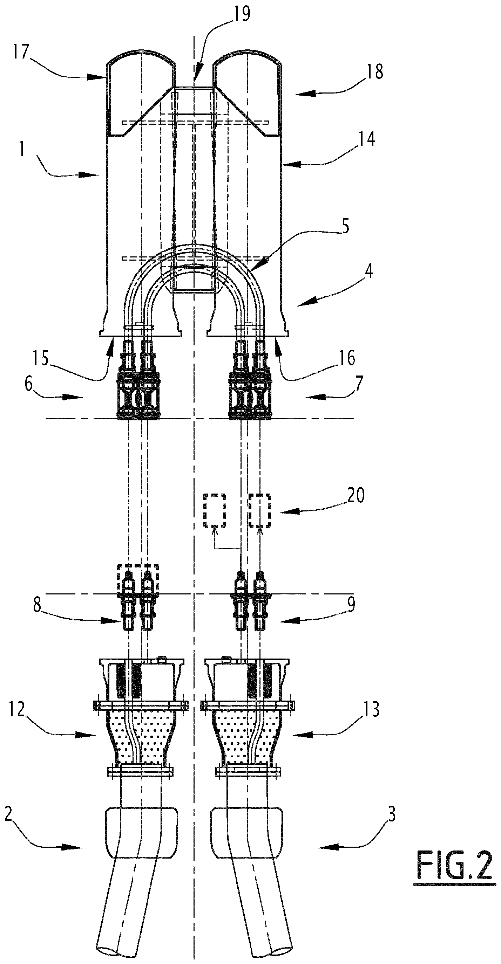

Une fois ces capots retirés, on retire également comme cela est illustré sur la figure 2, les capots de protection par exemple 20 et 21 des connecteurs d'extrémité par exemple de ces câbles ombilicaux.

Une fois ces différents capots de protection retirés, il est alors possible de placer les câbles ombilicaux 2 et 3 et la pièce intermédiaire de raccordement 4 en position de raccordement en face les uns de l'autre.

La pièce intermédiaire est alors disposée entre les extrémités des câbles pour les associer.

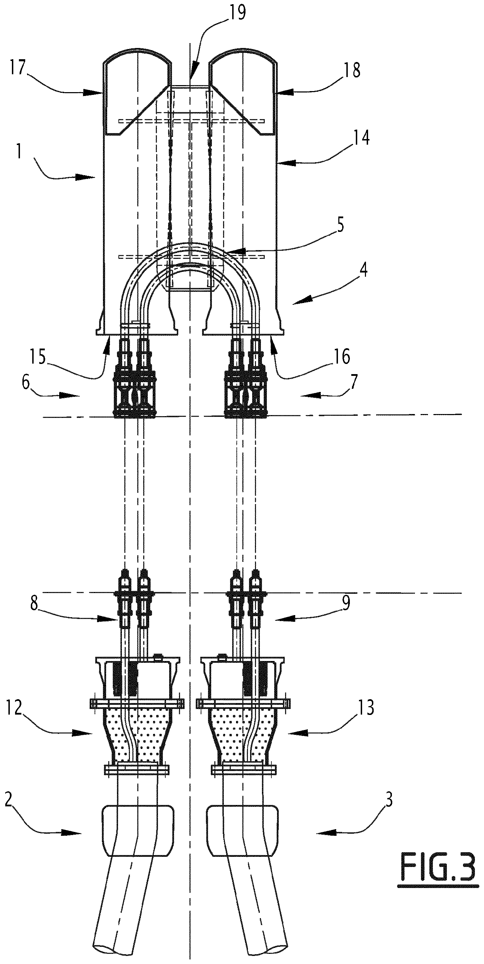

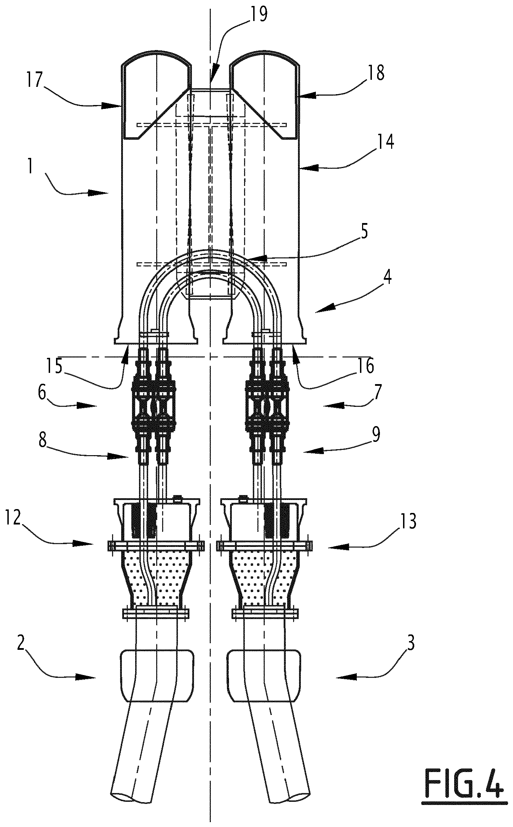

Puis, comme cela est illustré sur les figures 3 et 4, les câbles sont raccordés en utilisant les connecteurs complémentaires électriques et/ou optiques des extrémités des câbles ombilicaux 2 et 3 et de la portion de câble en U 5 de la pièce intermédiaire de raccordement.

Ceci est facilité dans l'exemple illustré, par le fait que le boîtier étanche 14 est libre en déplacement par rapport à la portion de câble en U 5 et peut donc être dégagé de la zone de raccordement des connecteurs complémentaires pour donner un meilleur accès à ces connecteurs et simplifier ce raccordement.

Une fois cette opération de raccordement électrique/optique des câbles ombilicaux 2 et 3 réalisée, il est alors possible de relier mécaniquement les câbles l'un à l'autre.

Pour ce faire, le boîtier étanche 14 est déplacé autour de la portion de câble en U jusqu'au moment où les extrémités des jambes 17 et 18, viennent en appui contre les capuchons 12 et 13 des extrémités des câbles ombilicaux 2 et 3.

La fixation étanche de la pièce intermédiaire et en particulier du boîtier 14 sur les capuchons 12 et 13, peut alors se faire de différentes façons.

Par exemple on peut utiliser des moyens en forme de colliers de serrage et de fixation.

Bien entendu d'autres modes de réalisation peuvent être envisagés comme par exemple des brides boulonnées, etc.

En fait, le boîtier 14 sert donc à fixer les câbles l'un sur l'autre, à l'aide des capuchons 12 et 13 qui sont fixés sur les extrémités des câbles 2 et 3.

Dans l'exemple qui vient d'être décrit, les câbles ombilicaux 2 et 3 arrivent dans le boîtier étanche 14 selon des axes sensiblement parallèles.

Bien entendu d'autres dispositions peuvent être envisagées.

De même, et comme cela a été également indiqué précédemment, les connecteurs de raccordement de ces câbles et de la portion de câble en U peuvent comporter des connecteurs optiques complémentaires permettant de relier des fibres optiques de ces câbles ombilicaux.

On conçoit alors qu'une telle structure présente un certain nombre d'avantages au niveau de la facilité de raccordement et de fixation des câbles les uns aux autres, du faible encombrement de ce système de raccordement, de sa rapidité et de sa fiabilité d'assemblage.

Bien entendu d'autres modes de réalisation peuvent être envisagés.

Ainsi, par exemple, le boîtier étanche 14 peut être relié en déplacement à la portion de câble en U 5, afin de se déplacer avec celle-ci.

## Revendications

1. Système de raccordement de câbles sous-marins (2, 3) et notamment de câbles ombilicaux pour des fermes d'énergie marine renouvelable, comportant :
- des capuchons (12, 13) d'extrémité fixés autour des câbles à raccorder (2, 3) à proximité des extrémités de ceux-ci, les capuchons d'extrémité étant fixés de manière étanche sur les câbles (2, 3),
- une pièce intermédiaire (4) de raccordement de ces câbles (2, 3), adaptée pour être placée entre des extrémités à raccorder des câbles (2, 3) et comportant des moyens (5) de raccordement électrique de ces câbles (2, 3), les moyens de raccordement électrique se présentant sous la forme d'une portion de câble (5) de forme générale en U, **caractérisé en ce que** la pièce intermédiaire de raccordement (4) se présente sous la forme d'un boîtier étanche (14) se présentant sous la forme générale d'un U renversé comportant deux jambes (17, 18), les extrémités des jambes (17, 18) comportant deux orifices (15, 16) de passage des câbles à raccorder (2, 3), les orifices (15,16) ou les jambes (17, 18) étant munis de moyens de fixation sur les capuchons (12, 13) d'extrémité, afin d'obturer les orifices du boîtier (14) et fixer les câbles (2, 3) sur le boîtier (14) par l'intermédiaire des capuchons (12, 13) d'extrémité et donc fixer les câbles (2, 3) l'un sur l'autre.

2. Système de raccordement de câbles sous-marins selon la revendication 1, **caractérisé en ce que** la pièce de raccordement (4) comporte en outre des moyens (5) de raccordement optique de fibres optiques des câbles ombilicaux (2, 3).

3. Système de raccordement de câbles sous-marins selon la revendication 1 ou 2, **caractérisé en ce que** le boîtier (14) est lié en déplacement aux moyens de raccordement des câbles.

4. Système de raccordement de câbles sous-marins selon l'une quelconque des revendications 1 à 3, **caractérisé en ce que** le boîtier (14) est libre en déplacement par rapport aux moyens (5) de raccordement des câbles (2, 3) pour permettre dans un premier temps le raccordement des câbles (2, 3) et dans un deuxième temps, une fois ce raccordement réalisé, la fixation du boîtier (14) sur les capuchons (12, 13) et donc la fixation des câbles l'un sur l'autre.

5. Système de raccordement de câbles sous-marins selon l'une quelconque des revendications 1 à 4, **caractérisé en ce que** le boîtier (14) et les capuchons (12, 13) sont fixés à l'aide de colliers de serrage et de fixation.

6. Système de raccordement de câbles sous-marins selon l'une quelconque des revendications 1 à 4, **caractérisé en ce que** le boîtier (14) et les capuchons (12, 13)sont fixés à l'aide de brides boulonnées.

7. Système de raccordement de câbles sous-marins selon l'une quelconque des revendications 1 à 6, **caractérisé en ce que** les extrémités de la portion de câble en U (5) et des câbles ombilicaux (2, 3) comportent des connecteurs électriques et/ou optiques complémentaires (6, 7, 8, 9).

8. Système de raccordement de câbles sous-marins selon l'une quelconque des revendications précédentes, dans lequel les extrémités des jambes (17, 18) sont en appui contre les capuchons (12, 13) d'extrémité des câbles ombilicaux (2, 3).

## Patentansprüche

1. System zum Verbinden von Unterwasserkabeln (2, 3) und insbesondere von Versorgungskabeln für Parks für erneuerbare Meeresenergie, umfassend:
- Kappen (12, 13) am Ende, die um die anzuschließenden Kabel (2, 3) in der Nähe ihrer Enden befestigt sind, wobei die Endkappen abdichtend an den Kabeln (2, 3) befestigt sind,
- ein Zwischenstück (4) zum Verbinden dieser Kabel (2, 3), das angepasst ist, um zwischen zu verbindenden Enden der Kabel (2, 3) platziert zu werden, und umfassend Einrichtungen (5) zum elektrischen Verbinden dieser Kabel (2, 3), wobei die Einrichtungen zum elektrischen Verbinden in Form eines Kabelabschnitts (5) mit allgemein U-förmiger Form vorliegen,
**dadurch gekennzeichnet, dass** das Verbindungszwischenstück (4) in Form eines dichten Gehäuses (14) vorliegt, das die allgemeine Form eines umgekehrten U umfassend zwei Schenkel (17, 18) aufweist, wobei die Enden der Schenkel (17, 18) zwei Öffnungen (15, 16) zum Durchführen der anzuschließenden Kabel (2, 3) umfassen, wobei die Öffnungen (15, 16) oder die Schenkel (17, 18) mit Befestigungseinrichtungen an den Kappen (12, 13) am Ende versehen sind, um die Öffnungen des Gehäuses (14) zu verschließen und die Kabel (2, 3) über die Endkappen (12, 13) an dem Gehäuse (14) zu befestigen und somit die Kabel (2, 3) aneinander zu befestigen.

2. Unterwasserkabel-Verbindungssystem nach Anspruch 1, **dadurch gekennzeichnet, dass** das Verbindungsstück (4) ferner Einrichtungen (5) zum optischen Verbinden von Lichtwellenleitern der Versorgungskabel (2, 3) umfasst.

3. Unterwasserkabel-Verbindungssystem nach Anspruch 1 oder 2, **dadurch gekennzeichnet, dass** das Gehäuse (14) beweglich mit den Kabelverbindungseinrichtungen verbunden ist.

4. Unterwasserkabel-Verbindungssystem nach einem der Ansprüche 1 bis 3, **dadurch gekennzeichnet, dass** das Gehäuse (14) in Bezug auf die Einrichtungen (5) zum Verbinden der Kabel (2, 3) frei beweglich ist, um in einer ersten Phase das Verbinden der Kabel (2, 3) und in einer zweiten Phase, sobald diese Verbindung hergestellt ist, die Befestigung des Gehäuses (14) an den Kappen (12, 13) und somit die Befestigung der Kabel aneinander zu ermöglichen.

5. Unterwasserkabel-Verbindungssystem nach einem der Ansprüche 1 bis 4, **dadurch gekennzeichnet, dass** das Gehäuse (14) und die Kappen (12, 13) mittels Klemm- und Befestigungsschellen befestigt sind.

6. Unterwasserkabel-Verbindungssystem nach einem der Ansprüche 1 bis 4, **dadurch gekennzeichnet, dass** das Gehäuse (14) und die Kappen (12, 13) mittels verschraubten Flanschen befestigt sind.

7. Unterwasserkabel-Verbindungssystem nach einem der Ansprüche 1 bis 6, **dadurch gekennzeichnet, dass** die Enden des U-förmigen Kabelabschnitts (5) und der Versorgungskabel (2, 3) komplementäre elektrische und/oder optische Verbinder (6, 7, 8, 9) umfassen.

8. Unterwasserkabel-Verbindungssystem nach einem der vorherigen Ansprüche, wobei die Enden der Schenkel (17, 18) an den Kappen (12, 13) am Ende der Versorgungskabel (2, 3) anliegen.

## Claims

1. A system for connecting submarine cables (2, 3) and especially umbilical cables for renewable marine energy farms, comprising:
- end caps (12, 13) fastened around the cables (2, 3) to be connected near ends thereof, the end caps being fastened sealably on the cables (2, 3),
- an intermediate part (4) for connecting these cables (2, 3), adapted to be placed between ends to be connected of the cables (2, 3) and including means (5) for the electrical connection of these cables (2, 3), the means for the electrical connection assuming the form of a cable portion (5) with a general U shape,
**characterized in that** the intermediate part (4) is in the form of a sealed housing (14) generally in the shape of an inverted U comprising two legs (17, 18), the ends of the legs (17, 18) comprising two passage orifices (15, 16) of the cables (2, 3) to be connected, the passage orifices (15, 16) or the legs (17, 18) being provided with fastening means on the end caps (12, 13), in order to close off the orifices of the housing (14) and to fasten the cables (2, 3) on the housing (14) by means of the end caps (12, 13) and therefore to fasten the cables (2, 3) on one another.

2. The system for connecting submarine cables according to claim 1, **characterized in that** the connecting part (4) further includes means (5) for the optical connection of optical fibers of the umbilical cables (2, 3).

3. The system for connecting submarine cables according to claim 1 or 2, **characterized in that** the housing (14) is linked in movement to the connecting means of the cables.

4. The system for connecting submarine cables according to any one of claims 1 to 3, **characterized in that** the housing (14) moves freely relative to the means of connection (5) of the cables (2, 3) in order to allow first the connection of the cables (2, 3) and secondly, once this connection is done, the fastening of the housing (14) on the caps (12, 13) and therefore the fastening of the cables on one another.

5. The system for connecting submarine cables according to any one of claims 1 to 4, **characterized in that** the housing (14) and the caps (12, 13) are fastened using gripping and fastening collars.

6. The system for connecting submarine cables according to any one of claims 1 to 4, **characterized in that** the housing (14) and the caps (12, 13) are fastened using bolted flanges.

7. The system for connecting submarine cables according to any one of claims 1 to 6, **characterized in that** the ends of the U-shaped cable portion (5) and umbilical cables (2, 3) include complementary electrical and/or optical couplers (6, 7, 8, 9).

8. The system for connecting submarine cables according to any one of the preceding claims, wherein the ends of the legs (17, 18) bear against the end caps (12, 13) of the umbilical cables (2, 3).
